# EUROPÄISCHE PATENTSCHRIFT

(11) **EP 4 585 396 B1**
(45) Veröffentlichungstag und Bekanntmachung des Hinweises auf die Patenterteilung: **23.09.2026**
(21) Anmeldenummer: 25151459.2
(22) Anmeldetag: 13.01.2025
(51) Int. Cl.: B29C 49/78, B29C 49/06, B29C 49/02, B29C 49/42, B29K 67/00, B29L 31/00, G01N 21/90

(54) **VORRICHTUNG UND VERFAHREN ZUM HERSTELLEN VON KUNSTSTOFFVORFORMLINGEN MIT INFRAROT-BILDAUFNAHMEEINRICHTUNG**
METHOD AND DEVICE FOR PRODUCING PLASTIC PREFORMS WITH INFRARED IMAGE RECORDING DEVICE
DISPOSITIF ET PROCÉDÉ DE FABRICATION D'ÉBAUCHES EN PLASTIQUE DOTÉES D'UN DISPOSITIF DE CAPTURE D'IMAGE INFRAROUGE

(30) Priorität: 15.01.2024 DE 102024101048
(43) Veröffentlichungstag der Anmeldung: 16.07.2025
(73) Patentinhaber: Krones AG, 93073 Neutraubling (DE)
(72) Erfinder: Wuensche, Dieter, 93073 Neutraubling (DE); Schober, Stefan, 93073 Neutraubling (DE); Niedermeier, Anton, 93073 Neutraubling (DE); Geltinger, Florian, 93073 Neutraubling (DE); Roth, Andreas, 93073 Neutraubling (DE)
(74) Vertreter: Hannke Bittner & Partner mbB Regensburg

(56) Entgegenhaltungen:
- WO-A1-2018/051227
- US-A1- 2017 227 472
- US-A1- 2021 331 371

## Beschreibung

Die vorliegende Erfindung bezieht sich auf eine Vorrichtung und ein Verfahren zum Herstellen von Kunststoffvorformlingen. Derartige Vorrichtungen und Verfahren sind aus dem Stand der Technik seit langem bekannt. Gattungsgemäße Vorrichtungen und Verfahren sind in den Patentschriften US2021/331371A1, WO2018/051227A1 und US2017/227472A1 beschrieben.

Dabei werden beispielsweise Spritzgussmaschinen bzw.

Spritzgießmaschinen eingesetzt, welche derartige Kunststoffvorformlinge, beispielsweise aus PET herstellen. Bei aus dem Stand der Technik bekannten Vorrichtungen und Verfahren werden üblicherweise in einem separaten Arbeitsgang Kunststoffvorformlinge hergestellt und später mit anderen Maschinen wie beispielsweise Streckblasmaschinen zu Behältnissen weiterverarbeitet.

In jüngerer Zeit ist man bestrebt, auch den Herstellungsvorgang der Kunststoffvorformlinge in eine entsprechende Behältnis Behandlungsanlage zu integrieren. Dies hat den Vorteil, dass die hergestellten Kunststoffvorformlinge aufgrund der Herstellung warm sind und dadurch gegebenenfalls Energie für die weitere Erwärmung der Kunststoffvorformlinge eingespart werden kann.

Im Stand der Technik ist es nicht üblich, Spritzgussmaschinen zu überwachen. Hergestellte Kunststoffvorformlinge werden nach dem Spritzgussvorgang meist ohne Überprüfung in Gitterboxen oder Oktabins oder auf Bändern weiter transportiert. Es ist daher aktuell keine Überwachung einer Spritzgussmaschine bekannt, um mögliche Ausfälle einzelner Spritzgusskavitäten frühzeitig zu erkennen.

Aus der DE 10 2000 1618 670 A1 sind ein Verfahren und eine Vorrichtung zur Prüfung von Kunststoffvorformlingen bekannt. Dabei werden die Kunststoffvorformlinge auf Förderbändern transportiert und bei einer Übergabe von einem auf das andere Förderband inspiziert.

Aus der WO 2018/036857 A1 ist ein optisches Inspektionssystem für Kunststoffvorformlinge bekannt. Dabei werden die Kunststoffvorformlinge mit zumindest einer Kameraeinrichtung derart inspiziert, dass die Kunststoffvorformlinge sich in einer gegenüber dem Spritzgussvorgang unveränderten relativen Lage zueinander befinden.

Aus der DE 602 8 756 T2 ist ebenfalls eine Methode und eine Vorrichtung zur Handhabung von ausgeworfenen Spritzgussteilen bekannt.

Der vorliegenden Erfindung liegt die Aufgabe zugrunde, eine Überwachung, insbesondere einer Vorrichtung zum Herstellen von Kunststoffvorformlingen wie beispielsweise einer Spritzgussmaschine bzw. Spritzgiesmaschine durchzuführen. Diese Aufgabe wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Herstellen von Kunststoffvorformlingen weist eine Herstellungseinrichtung auf, welche eine Vielzahl von Herstellungseinheiten und/oder Kavitäten aufweist, wobei jede dieser Kavitäten zum Herstellen eines Kunststoffvorformlings geeignet und bestimmt ist und wobei diese Kunststoffvorformlinge jeweils einteilig ausgebildet sind und wenigstens einen Grundkörper sowie einen an dem Grundkörper angeordneten Gewindeabschnitt aufweisen.

Weiterhin weist die Vorrichtung eine Entnahmeeinrichtung auf, welche dazu geeignet und bestimmt ist, die von der Herstellungseinrichtung gefertigten Kunststoffvorformlinge von dieser Herstellungseinrichtung - insbesondere gemeinsam - zu entnehmen. Weiterhin weist die Entnahmeeinrichtung einen Träger auf, der zum Halten der entnommenen Kunststoffvorformlinge geeignet und bestimmt ist, sowie eine Transporteinrichtung, welche dazu geeignet und bestimmt ist, den Träger mit den von der Entnahmeeinrichtung entnommenen Kunststoffvorformlinge gemeinsam in einer vorgegebenen Transportrichtung zu transportieren, wobei die Vorrichtung eine Inspektionseinrichtung zum Inspizieren der gefertigten Kunststoffvorformlinge aufweist.

Erfindungsgemäß weist die Inspektionseinrichtung wenigstens eine Infrarot-Bildaufnahmeeinrichtung auf, welche dazu geeignet und bestimmt ist, ein ortsaufgelöstes Bild wenigstens eines Bereichs einer Vielzahl der gefertigten Kunststoffvorformlinge aufzunehmen.

Es wird daher im Rahmen der Erfindung vorgeschlagen, dass die Inspektion der Kunststoffvorformlinge bereits in der Herstellungseinrichtung und/oder im Rahmen des Herstellungsprozesses durchgeführt wird.

Auf diese Weise wird eine Möglichkeit geschaffen, dass mithilfe einer Inspektionseinrichtung und insbesondere eines Infrarot Meßsystems die Kunststoffvorformlinge direkt nach ihrer Herstellung bzw. nach dem Spritzen überwacht werden und bevorzugt dadurch mögliche Temperaturunterschiede erkannt werden können, welche sich auf verschlissene und oder fehlerhafte Kavitäten, Heizungen, oder fehlerhafte Kühleinheiten oder einen fehlerhaften Spritzprozess in der jeweiligen Qualität zurückführen lassen.

Mithilfe dieser Infrarot Überwachung können daher vorzeitig bzw. frühzeitig Fehler in der Spritzgiesmaschine erkannt und behoben werden, insbesondere, bevor es zu Ausfällen kommt. Zusätzlich kann man fehlerhaft gespritzte Kunststoffvorformlinge erkennen und diese bevorzugt auch ausschleusen.

Bevorzugt ist die Infrarot - Bildaufnahmeeinrichtung und/oder eine dieser zugeordnete Auswertungseinrichtung dazu geeignet und bestimmt, wenigstens einen Messwert auszugeben, der für eine physikalische Eigenschaft der Kunststoffvorformlinge (beispielsweise deren Temperatur) charakteristisch ist. So kann etwa aus den aufgenommenen Bildern auf die Temperaturen der Kunststoffvorformlinge geschlossen werden.

Besonders bevorzugt ist der besagte Träger dazu geeignet und bestimmt, die Kunststoffvorformlinge wenigstens teilweise in äquidistanten Positionen zueinander zu halten, insbesondere auch in einer zueinander paralleler Ausrichtung (der Kunststoffvorformlinge). So kann beispielsweise dieser Träger eine Vielzahl von Öffnungen aufweisen, welche jeweils zur Aufnahme eines Kunststoffverformung geeignet und bestimmt sind. Diese Öffnungen können als Array angeordnet sein.

Bei einer bevorzugten Ausführungsformen weist die Vorrichtung eine Übernahmeeinrichtung auf, welche dazu geeignet und bestimmt ist, die Kunststoffvorformlinge von dem Träger zu übernehmen.

Bevorzugt weist dabei diese Übernahmeeinrichtung eine Vielzahl von Übernahmeeinheiten auf, welche jeweils dazu geeignet und bestimmt sind, jeweils einzelne Kunststoffvorformlinge von den Träger zu übernehmen. Dabei können diese Übernahmeeinheiten beispielsweise Vakuumgreifer sein, welche zur Übernahme der Kunststoffvorformlinge geeignet und bestimmt sind. Bevorzugt weist daher die Übernahmeeinrichtung unabhängig voneinander steuerbare Übernahmeelemente auf, die jeweils zur Übernahme eines Kunststoffvorformlings geeignet und bestimmt sind. Bevorzugt handelt es sich hierbei, wie erwähnt, um Vakuumgreifer, welche jeweils an eine Mündung der Kunststoffvorformlinge anlegbar sind.

Bei einer weiteren vorteilhaften Ausführungsformen ist die Infrarotaufnahmeeinrichtung dazu geeignet und bestimmt, Strahlung zu erfassen, welche in einem Wellenlängenbereich von 4000nm bis 20000nm, bevorzugt in einem Wellenlängenbereich von 6000nm bis 8000nm und besonders bevorzugt in einen Wellenlängenbereich von 8000nm bis 15000nm liegt.

Bei einer weiteren bevorzugten Ausführungsformen ist die Infrarot Bildaufnahmeeinrichtung dazu geeignet und bestimmt, einen Wert auszugeben, der für eine Temperatur der Kunststoffvorformlinge charakteristisch ist und bevorzugt dazu geeignet und bestimmt ist, für jeden der inspizierten Kunststoffvorformlinge wenigstens einen Wert auszugeben, der für dessen Temperatur charakteristisch ist. Bevorzugt ist daher die Infrarot-Bildaufnahmeeinrichtung und/oder eine Auswerteeinrichtung dazu geeignet und bestimmt eine Vielzahl von Messwerten auszugeben, welche bevorzugt wenigstens der Anzahl der transportierten Kunststoffvorformlinge entspricht.

Bevorzugt ist jeder dieser Messwerte wenigstens einem und bevorzugt genau einem hergestellten Kunststoffvorformlinge zugeordnet ist und/oder wird.

Zu diesem Zweck kann die Inspektionseinrichtung eine Auswerteeinrichtung zum Auswerten aufgenommener Bilder aufweisen, welche bevorzugt jeden einzelnen der von der Infrarot Bildaufnahmeeinrichtung aufgenommenen Kunststoffvorformlinge erfasst und/oder identifiziert. Bevorzugt wird für jeden dieser Kunststoffvorformlinge ein charakteristischer Messwert, beispielsweise ein für eine Temperatur dieses Kunststoffvorformlings charakteristischer Messwert erfasst.

Dies ist insbesondere auch deshalb durchführbar, weil bevorzugt die Infrarot - Bildaufnahmeeinrichtung eine vorgegebene und auch feste Position gegenüber den mit den Kunststoffvorformlingen bestückten Träger aufweist.

Bei der hier beschriebenen Messung von physikalischen Größen und insbesondere der Temperaturen der Kunststoffvorformlinge ist auch der Emissionsgrad ein wesentlicher Faktor. Er ist von verschiedenen Einflüssen abhängig und kann daher je nach Applikation hier auf die Fertigung von Kunststoffvorformlingen eingestellt werden. So können beispielsweise Kunststoffe mit einer Dicke von mehr als 0,4 mm sehr gut im langweiligen Infrarot Spektralbereich (8000nm-14000 nm) mit Emissionsgraden von größer 0,9 gemessen werden.

Bevorzugt weist die Inspektionseinrichtung eine Kalibriereinrichtung auf, welche dazu geeignet und bestimmt ist, die Infrarot-Bildaufnahmeeinrichtung zu kalibrieren, insbesondere unter Berücksichtigung der hergestellten und/oder herzustellenden Kunststoffvorformlinge.

Es ist dabei möglich, dass die Inspektionseinrichtung eine Flächenbildkamera aufweist, es wäre jedoch auch die Verwendung einer Zeilenkamera möglich. Es wäre auch möglich, ein oder mehrere Bilder aufzunehmen und diese einem vorgegebenen Winkel abzuwickeln, beispielsweise einen Winkel von wenigstens 180°, bevorzugt von wenigstens 360°.

Bevorzugt ist die Inspektionseinrichtung dazu eingerichtet und bestimmt bzw. derart angeordnet, dass sie dazu geeignet und bestimmt ist, die von den Träger gehaltenen Kunststoffvorformlinge wenigstens bereichsweise und bevorzugt genau bereichsweise zu inspizieren (etwa in dem Bereich des Gewindes des Kunststoffvorformlings oder dem Bereich des (zu expandierenden) Grundkörpers des Kunststoffvorformlings).

Bei einer weiteren vorteilhaften Ausführungsformen ist die Inspektionseinrichtung derart angeordnet, dass sie dazu geeignet und bestimmt ist, die von der Übernahmeeinrichtung gehaltenen Kunststoffvorformlinge zu inspizieren.

Dabei ist es möglich, dass die Inspektionseinrichtung vorgegebene Bereiche der Kunststoffvorformlinge inspiziert, beispielsweise deren Mündungen oder deren Grundkörper.

Bei einer weiteren vorteilhaften Ausführungsformen weist die Vorrichtung eine Zuordnungseinrichtung auf, die dazu geeignet und bestimmt ist, einem von der Inspektionseinrichtung inspizierten Kunststoffvorformling und insbesondere jedem dieser von Inspektionseinrichtung inspizierten Kunststoffvorformlinge jeweils diejenige Herstellungseinheit und/oder Kavität zuzuordnen, welche diesen Kunststoffvorformling hergestellt hat. Durch diese insbesondere eindeutige Zuordnung ist bevorzugt auch eine genauere Steuerung und/oder Regelung der Herstellungseinrichtung möglich, wie nachstehend beschrieben.

Bei einer weiteren vorteilhaften Ausführungsform weist die Vorrichtung ein Steuerungseinrichtung zum Steuern der Herstellungseinrichtung auf, wobei diese Steuerungseinrichtung bevorzugt dazu geeignet und bestimmt ist, jede einzelne der Herstellungseinheiten zu steuern. Auf diese Weise kann die Herstellungseinrichtung individuell gesteuert und insbesondere geregelt werden.

Bevorzugt ist die Steuerungseinrichtung dazu geeignet und bestimmt, die Herstellungseinrichtung und/oder die einzelnen Herstellungseinheiten (jeweils) in Abhängigkeit von wenigstens einen Messwert zu steuern und insbesondere zu regeln.

Bevorzugt ist diese Steuerungseinrichtung dazu geeignet wenigstens einen Parameter und bevorzugt eine Vielzahl von Parametern zu steuern und/oder zu regeln, welche für den Betrieb der Herstellungseinrichtung und/oder die Herstellungseinheiten charakteristisch sind.

Bevorzugt ist der oder sind diese Parameter aus einer Gruppe von Parametern ausgewählt, welche Nadelverschlusszeiten, Einspritzverzögerungen, ein zeitliches Verhalten des Einspritzens (von Kunststoffmasse), ein Druckprofil, einen Nachdruck, insbesondere ein Druckprofil des Nachdrucks und eine Zeitdauer des Nachdrucks, eine Kühlzeit und dergleichen enthält.

Daneben kann es sich bei dem Parameter auch um wenigstens eine Temperatur handeln, insbesondere eine Temperatur einer Kavität zum Herstellen der Kunststoffvorformlinge, eine Temperatur einer Düse, insbesondere einer Einspritzdüse für eine Kunststoffmasse, eine Temperatur eines Hotrunners oder eine Temperatur einer oder mehrerer Heizzonen der Plastifizierung.

Daneben kann der Parameter auch aus einer Gruppe von Parametern ausgewählt sein, welche eine Drehzahl einer (Förder-)Schnecke, einen Staudruck der Schmelze oder eine Position und/oder einen Druck einer Schließeinheit (insbesondere beim Spritzprägen) enthält.

Insbesondere ist dabei eine Regelung in Abhängigkeit von der Infrarot - Bildaufnahmeeinrichtung gemessenen Temperaturwerten der einzelnen Kunststoffvorformlinge möglich.

Bei einer weiteren bevorzugten Ausführungsformen ist die (Infrarot) Inspektionseinrichtung auch dazu geeignet und bestimmt, den besagten physikalischen Wert für jeden Kunststoffvorformling ortsaufgelöst zu erfassen.

So ist es bevorzugt möglich, beispielsweise nicht nur die Temperatur der einzelnen Kunststoffvorformlinge zu bestimmen oder zu ermitteln, sondern diese Temperatur auch in Abhängigkeit von den Kunststoffvorformlingen (und/oder bezüglich der Kunststoffvorformlinge) ortsaufgelöst zu bestimmen, beispielsweise zu erfassen, dass bestimmte Bereiche des Gewindes kühler sind als andere Bereiche.

Besonders bevorzugt werden in Abhängigkeit von dem aufgenommenen Bild und insbesondere den ermittelten Temperaturwerten die einzelnen Herstellungseinheiten gesteuert. So können beispielsweise die einzelnen Herstellungseinheiten individuelle Heizeinrichtungen aufweisen, die entsprechend unabhängig voneinander gesteuert werden und/oder steuerbar sind. Auch kann beispielsweise ein Anpressdruck in den Herstellungseinheiten gesteuert werden. Daneben kann beispielsweise auch Einfluss genommen werden auf eine Materialverteilung des den Herstellungseinheiten zugeführten Kunststoffmaterials.

Bei einer weiteren vorteilhaft Ausführungsformen weist die Vorrichtung eine Kühleinrichtung auf, welche dazu geeignet und bestimmt ist, die von der Herstellungseinrichtung hergestellten Kunststoffvorformlinge wenigstens abschnittsweise zu kühlen. Bevorzugt ist auch diese Kühleinrichtung den Herstellungsprozess integriert. Besonders bevorzugt erfolgt eine Entnahme und/oder ein Transport der Kunststoffvorformlinge erst nach deren Kühlung bzw. nach der Kühlung der einzelnen Kunststoffvorformlinge.

Bevorzugt ist auch die Kühleinrichtung steuerbar und insbesondere auch in Abhängigkeit von einem Inspektionsergebnis der Inspektionseinrichtung steuerbar und insbesondere regelbar.

Weiterhin ist es möglich, dass diese Kühlung vor der Entnahme der Kunststoffvorformlinge erfolgt oder bevorzugt nach deren Entnahme aus den einzelnen Herstellungseinheiten. So wird es möglich, dass beispielsweise die Kühleinrichtung, die in dem Träger befindlichen Kunststoffvorformlinge kühlt. Dabei kann die Kühlung beispielsweise durch Beaufschlagung der Kunststoffvorformlinge mit Luft oder auch mit einer Kühlflüssigkeit erfolgen. Auch ist eine Kühlung durch Konvektion möglich.

Bei einer weiteren bevorzugten Ausführungsform weist die Herstellungseinrichtung eine Plastifiziereinheit auf. Diese kann eine Spritzeinheit aufweisen, welche zum Einspritzen von Kunststoffmasse geeignet ist. Diese Spritzeinheit weist bevorzugt eine Förderschnecke zum Fördern des Kunststoffmaterials auf sowie bevorzugt eine Düse, welche sich an diese Förderschnecke anschließt.

Daneben weist die Herstellungseinrichtung wenigstens eine Materialzuführungseinrichtung auf, welche zum Zuführen eines Kunststoffmaterials und insbesondere eines Kunststoffmaterials in Granulatform geeignet und bestimmt ist.

Bei einer weiteren bevorzugten Ausführungsform weist die Herstellungseinrichtung eine Trockungseinrichtung zum Trocknen des zuzuführenden Kunststoffgranulats auf.

Bei einer weiteren bevorzugten Ausführungsform weist die Vorrichtung eine zweite Inspektionseinrichtung zum Inspizieren der gefertigten Kunststoffvorformlinge auf, wobei die zweite Inspektionseinrichtung wenigstens eine Bildaufnahmeeinrichtung und bevorzugt wenigstens eine Infrarot-Bildaufnahmeeinrichtung aufweist, welche dazu geeignet und bestimmt ist wenigstens ein ortsaufgelöstes Bild wenigstens eines zweiten Bereichs einer Vielzahl der gefertigten Kunststoffvorformlinge aufzunehmen.

In diesem Falle kann auch die zweite Inspektionseinrichtung in der oben beschriebenen Weise ausgeführt werden, sodass auch eine Wiederholung der einzelnen oben beschriebenen Merkmale verzichtet wird.

Auch ist es möglich, dass die Herstellungseinrichtung auf Basis von dieser zweiten Inspektionseinrichtung ausgegebenen Werten (und insbesondere auf Basis von gemessenen Temperaturen der Kunststoffvorformlinge) gesteuert wird.

Bei einer weiteren vorteilhaften Ausführungsformen weist die Vorrichtung eine weitere Inspektionseinrichtung zum Inspizieren der gefertigten Kunststoffvorformlinge auf. Hierbei kann es sich beispielsweise um eine Bildaufnahmeeinrichtung handeln, welche jeweils ortsaufgelöste Bilder der Kunststoffvorformlinge aufnimmt und bei der sich insbesondere nicht um eine Infrarot - Bildaufnahmeeinrichtung handelt, sondern um eine Kamera oder Bildaufnahmeeinrichtung, welche im sichtbaren Wellenlängenbereich Bilder aufnimmt.

Diese weitere Bildaufnahmeeinrichtung kann beispielsweise dazu verwendet werden, um Fehler an einzelnen Kunststoffvorformlingen zu erkennen, beispielsweise nicht vollständig geformte Mündungen der Behältnisse oder auch Löcher oder dergleichen.

Bevorzugt ist die oben erwähnte Zuordnungseinrichtung auch dazu geeignet und bestimmt, den von der weiteren Bildaufnahmeeinrichtung aufgenommenen Kunststoffvorformlingen jeweils diejenigen Herstellungseinheiten zuzuordnen, welche diese Kunststoffvorformlinge hergestellt haben.

Bevorzugt ist die Herstellungseinrichtung auch unter Berücksichtigung der von der weiteren Inspektionseinrichtungen ausgegebenen Messwerte steuerbar.

Bevorzugt weist die Vorrichtung auch eine Beleuchtungseinrichtung auf, um die von dieser weiteren Inspektionseinrichtung inspizierten Kunststoffvorformlinge zu beleuchten.

Die vorliegende Erfindung ist weiterhin auf ein Verfahren zum Herstellen von Kunststoffvorformlingen gerichtet, mit einer Herstellungseinrichtung, welche eine Vielzahl von Herstellungseinheiten und/oder Kavitäten aufweist, wobei jede dieser Herstellungseinheiten und/oder Qualitäten einen Kunststoffvorformling herstellt und wobei diese Kunststoffvorformlinge jeweils einteilig ausgebildet sind und einen Grundkörper sowie einen an dem Grundkörper angeordneten Gewindeabschnitt aufweisen.

Weiterhin weist die Vorrichtung eine Entnahmeeinrichtung auf, welche die von der Herstellungseinrichtung gefertigten Kunststoffvorformlinge von dieser Herstellungseinrichtung gemeinsam entnimmt, wobei die Entnahmeeinrichtung einen Träger aufweist, der die entnommenen Kunststoffvorformlinge hält. Weiterhin ist eine Transporteinrichtung vorgesehen, welche den Träger mit den von der Entnahmeeinrichtung entnommenen Kunststoffvorformlingen in einer vorgegebenen Transportrichtung transportiert, wobei die Vorrichtung eine Inspektionseinrichtung aufweist, welche die gefertigten Kunststoffvorformlinge inspiziert.

Erfindungsgemäß weist die Inspektionseinrichtung wenigstens eine erste Infrarot - Bildaufnahmeeinrichtung auf, welche ein ortsaufgelöstes Bild wenigstens eines Bereichs einer Vielzahl der gefertigten Kunststoffvorformlinge aufnimmt und wenigstens einen Wert ausgibt, der für eine physikalische Eigenschaft und bevorzugt eine Temperatur der inspizierten Kunststoffvorformlinge charakteristisch ist.

Besonders bevorzugt nimmt die Infrarot - Bildaufnahmeeinrichtung Bild der Kunststoffvorformlinge unmittelbar nach deren Entnahme und/oder während des Transports mit der ersten Transporteinrichtung auf. Dabei ist es möglich, dass die Infrarot - Bildaufnahmeeinrichtung ein Bild während der Bewegung dieser Kunststoffvorformlinge und/oder dieser Transporteinrichtung aufnimmt.

Besonders bevorzugt wertet eine Auswerteeinrichtung die aufgenommenen Bilder derart aus, dass jedem einzelnen der erfassten Kunststoffvorformlinge ein für diesen Kunststoffvorformling charakteristischer Wert zugeordnet und insbesondere ein für dessen Temperatur charakteristischer Wert zugeordnet wird.

Besonders bevorzugt wird die Herstellungseinrichtung bzw. werden besonders bevorzugt die einzelnen Herstellungseinheiten der Herstellungseinrichtung unter Berücksichtigung dieser für jeden einzelnen Kunststoffvorformling erfassten Messwerte gesteuert und insbesondere geregelt.

Bei einem weiteren bevorzugten Verfahren übernimmt eine Übernahmeeinrichtung die Kunststoffvorformlinge von dem Träger. Dabei weist bevorzugt diese Übernahmeeinrichtung eine Vielzahl von Übernahmeelementen auf, welche jeweils einen Kunststoffvorformling übernehmen. Insbesondere übernehmen diese Übergabeelemente die einzelnen Kunststoffvorformlinge unter Verwendung von Vakuum bzw. Unterdruck.

Bei einer weiteren bevorzugten Ausführungsform wendet eine Wendeeinrichtung die von der Übernahmeeinrichtung gehaltenen Kunststoffvorformlinge, sodass deren Ausrichtung geändert wird. Bevorzugt wendet die Wendeeinrichtung eine Ausrichtung der Kunststoffvorformlinge um einen vorgegebenen Winkel und insbesondere um einen Winkel von 90°

Weitere Vorteile und Ausführungsformen ergeben sich aus den beigefügten Zeichnungen:

Darin zeigen:
- Fig. 1: eine grob schematische Darstellung einer erfindungsgemäßen Vorrichtung;
- Fig. 2: eine Darstellung einer Herstellungseinrichtung zum Herstellen von Kunststoffvorformlinge in einer ersten Ansicht;
- Fig. 3: eine weitere Ansicht der in Fig 2 gezeigten Herstellungseinrichtung;
- Fig. 4: eine Darstellung zur Veranschaulichung des erfindungsgemäßen Verfahrens;
- Fig. 5: eine Darstellung einer erfindungsgemäßen Vorrichtung; und
- Fig. 6: eine detailliertere Darstellung einer erfindungsgemäßen Vorrichtung.

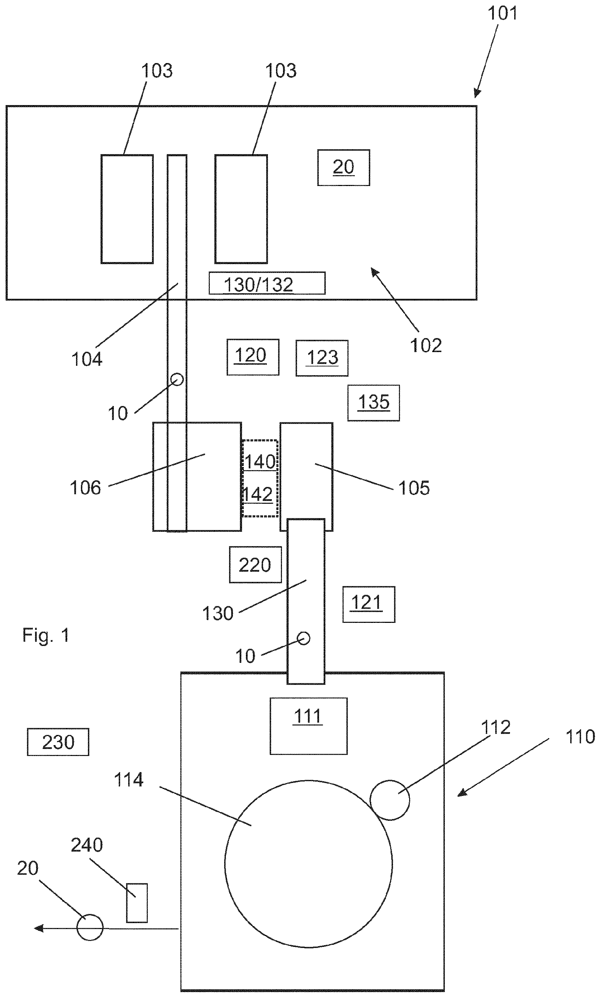

Fig. 1 zeigt eine grob schematische Darstellung einer Vorrichtung 101 zum Herstellen von Kunststoffbehältnissen. Diese Vorrichtung 101 weist eine Herstellungseinrichtung 102 auf, welche Kunststoffvorformlinge 10 herstellt. Bevorzugt handelt es sich bei dieser Herstellungseinrichtung 102 hier um eine Spritzgießmaschine. Diese Herstellungseinrichtung 102 weist dabei eine Vielzahl von Herstellungseinheiten und insbesondere Formwerkzeugen auf, welche jeweils dazu geeignet und bestimmt sind, einzelne Kunststoffvorformlinge 10 herzustellen.

Diese Herstellungseinheiten weisen bevorzugt jeweils Kavitäten auf, welche zum Herstellen der Kunststoffvorformlinge geeignet und bestimmt sind. Bevorzugt sind diese Herstellungseinheiten 103 unabhängig voneinander steuerbar. Diesen Herstellungseinheiten sind bevorzugt jeweils Heizelemente zugeordnet.

Das Bezugszeichen 104 kennzeichnet schematisch eine Entnahmeeinrichtung, welche die spritzgegossenen Kunststoffvorformlinge 10 aus den Herstellungseinheiten 102 entnimmt. Bevorzugt ist dabei diese Entnahmeeinrichtung dazu geeignet und bestimmt sämtlich der Kunststoffvorformlinge gemeinsam von den Herstellungseinheiten und/oder den Kavitäten zu entnehmen. Bevorzugt ist dabei diese Entnahmeeinrichtung dazu geeignet und bestimmt, die einzelnen Kunststoffvorformlinge durch eine Bewegung der Kunststoffvorformlinge in deren Längsrichtung von den Herstellungseinheiten zu entnehmen.

Das Bezugszeichen 106 kennzeichnet eine Kühleinrichtung, insbesondere in Form einer Nachkühleinheit, welche die hergestellten Kunststoffvorformlinge 10 kühlt. Bevorzugt werden die Kunststoffvorformlinge direkt nach deren Herstellung in dieser Kühleinrichtung 106 eingelegt und/oder der Kühleinrichtung zugeführt.

Das Bezugszeichen 130 kennzeichnet eine erfindungsgemäße Inspektionseinrichtung mit einer Infrarot - Bildaufnahmeeinrichtung 132, welche ein Bild von den entnommenen oder zu entnehmenden Kunststoffvorformlinge aufnimmt. Diese Inspektionseinrichtung ist dabei bevorzugt dazu geeignet, jeden einzelnen der gefertigten Kunststoffvorformlinge zu erfassen.

Entlang des Transportpfads der Transporteinrichtung 104 ist eine Inspektionseinrichtung und insbesondere eine erste Temperaturerfassungseinrichtung 120 angeordnet, welche eine Temperatur der Kunststoffvorformlinge oder einen hierfür charakteristischen Wert erfasst und insbesondere berührungslos erfasst. Dabei ist diese erste Temperaturerfassungseinrichtung 120 insbesondere dazu geeignet und bestimmt, die Temperatur jedes einzelnen Kunststoffvorformlings 10 zu erfassen. Neben oder anstelle der Temperaturerfassungseinrichtung kann an dieser Stelle auch eine Inspektionseinrichtung vorgesehen sein, welche wenigstens einen für den Kunststoffvorformling charakteristischen Wert erfasst.

Das Bezugszeichen 135 kennzeichnet eine Zuordnungseinrichtung, welche jedem Kunststoffvorformling 10, dessen Temperatur erfasst wurde eine Herstellungseinheit 103, welche diesen Kunststoffvorformling hergestellt hat, zuordnet. Die Herstellungseinrichtung 101 weist bevorzugt wenigstens eine Steuerungseinrichtung 21 auf, welche dazu geeignet und bestimmt die ist, die einzelnen Herstellungseinheiten auch in Abhängigkeit von den gemessenen Temperaturen der einzelnen Kunststoffvorformlinge zu steuern.

Bevorzugt ist diese Zuordnungseinrichtung auf dazu geeignet, jedem von der Inspektionseinrichtung 130 erfassten Kunststoffvorformling diejenige Herstellungseinheit 103 zuzuordnen, welche diesen hergestellt hat.

Das Bezugszeichen 105 kennzeichnet eine Transporteinrichtung und insbesondere eine Handlingseinheit, welche die Kunststoffvorformlinge 10 von der Transporteinrichtung 104 übernimmt. Bei dieser Handlungseinheit kann es sich beispielsweise um eine Übernahmeeinrichtung etwa die oben erwähnte Übernahmeeinrichtung handeln, welche dazu geeignet und bestimmt ist, die Kunststoffvorformlinge von einem Träger zu übernehmen. Bevorzugt ist diese Übernahmeeinrichtung dazu geeignet und bestimmt, jeden Kunststoffvorformling einzeln zu übernehmen.

Zusätzlich oder alternativ ist bevorzugt die Zuordnungseinrichtung 130 auch in der Lage, jedem Kunststoffvorformling diejenige Umformungsstation 112 zuzuordnen, welche diesem Kunststoffvorformling zu einem Kunststoffbehältnis umformen wird.

Bevorzugt ist daher die erste Temperaturerfassungseinrichtung zwischen der Herstellungseinrichtung und/oder den einzelnen Herstellungseinheiten und der Kühleinrichtung 106 und/oder der Transporteinrichtung 105 angeordnet.

Das Bezugszeichen 121 kennzeichnet eine weitere Inspektionseinrichtung, welche wenigstens einen Wert erfasst, welcher für den jeweils inspizierten Kunststoffvorformling charakteristisch ist. Auch hier kann es sich bevorzugt wieder um einen Wert handeln, der aus einer Gruppe von Werten ausgewählt ist, welche eine Geometrie der Kunststoffvorformlinge, eine Farbe der Kunststoffvorformlinge, eine Feuchte der Kunststoffvorformlinge, einen IV-Wert der Kunststoffvorformling, eine Temperatur der Kunststoffvorformling oder dergleichen enthält.

Bevorzugt werden diese Werte einer übergeordneten Steuerung zur Verfügung gestellt, um Parameter der gesamten Vorrichtung zu steuern.

Weiterhin ist optional eine zweite Inspektionseinrichtung (nicht gezeigt) mit einer Infrarot - Bildaufnahmeeinrichtung (nicht gezeigt) zum Inspizieren der Kunststoffvorformlinge vorgesehen

Es kann weiterhin eine Ausleiteinrichtung vorgesehen sein, welche (insbesondere abhängig von den erwähnten Kennwerten) bewirkt, dass einzelne Kunststoffvorformlinge nicht an die Umformungseinrichtung 112 übergeben werden.

Weiterhin kann eine (nicht gezeigte) Lückenschließeinrichtung vorgesehen sein, welche durch die Ausleitung einzelner Kunststoffvorformlinge entstehende Lücken wieder schließt.

Das Bezugszeichen 110 kennzeichnet in der Gesamtheit eine Umformungseinrichtung, welche die Kunststoffvorformlinge zu Kunststoffbehältnissen 20 umformt.

Dabei ist bevorzugt zunächst eine Erwärmungseinrichtung 111 vorgesehen, welche die Kunststoffvorformlinge auf eine Temperatur erwärmt, die für eine Umformung und insbesondere eine Expansion zu den Kunststoffbehältnissen 20 geeignet ist.

Die Umformungseinrichtung 110 weist bevorzugt einen drehbaren Träger 114 auf, an dem eine Vielzahl von Umformungsstationen 112 angeordnet ist. Diese Umformungsstationen sind bevorzugt unabhängig voneinander steuerbar.

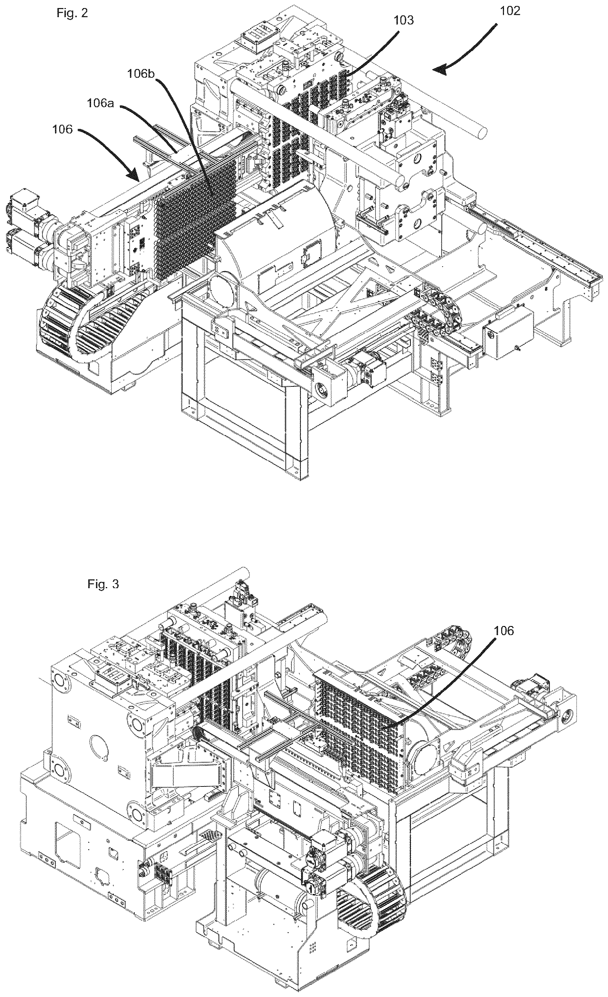

Fig. 2 und Fig. 3 zeigen eine erste Ansicht einer Herstellungseinrichtung 102 zum Herstellen der Kunststoffvorformlinge. Dabei kennzeichnet das Bezugszeichen 103 eine Vielzahl von Herstellungseinheiten, welche jeweils einzelne Kunststoffvorformlinge herstellen.

Das Bezugszeichen 106 kennzeichnet eine Kühleinrichtung zum Kühlen der Kunststoffvorformlinge. Das Bezugszeichen 106a kennzeichnet eine Abnahmeeinrichtung zum Abnehmen der Kunststoffvorformlinge nach dem Herstellungsprozess.

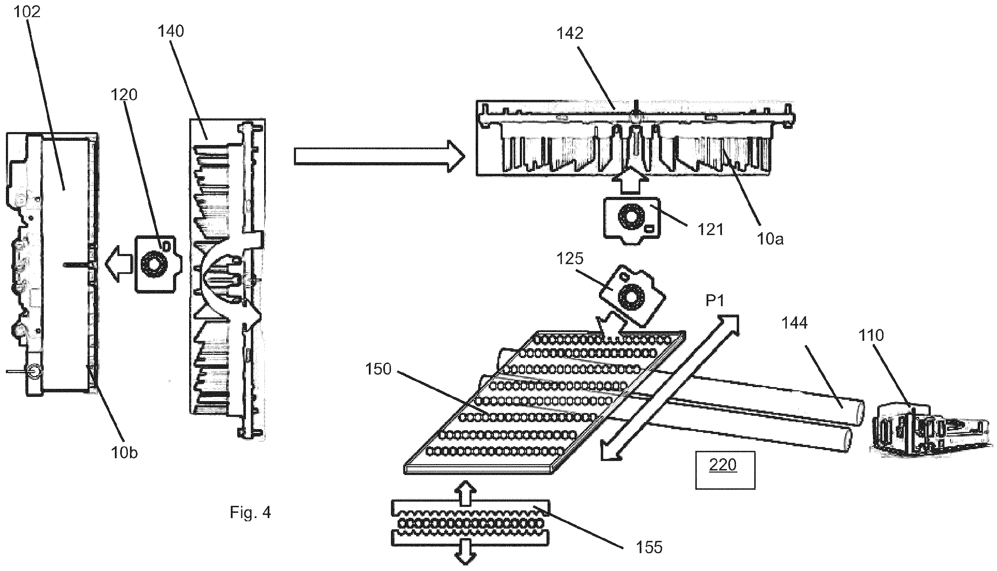

Fig. 4 zeigt eine Darstellung zur Veranschaulichung der erfindungsgemäßen Vorrichtung sowie des erfindungsgemäßen Verfahrens.

Dabei ist die Herstellungseinrichtung 102 vorgesehen, welche eine Vielzahl von (nicht im Detail gezeigten Herstellungseinheiten aufweisen, welche jeweils die Kunststoffvorformlinge herstellen. Man erkennt, dass die Mündungen 10b der einzelnen Kunststoffvorformlinge.

Das Bezugszeichen 120 kennzeichnet die erste Inspektionseinrichtung, welche hier insbesondere ein Bild der Mündungen 10b aufnimmt, wobei die einzelnen Mündungen und damit die einzelnen Kunststoffvorformlinge individualisierbar sind.

Das Bezugszeichen 140 kennzeichnet eine Wendeeinrichtung, welche den Träger mit den daran angeordneten Kunststoffvorformlingen wendet, hier um 90°. Daneben findet in diesem Bereich eine Kühlung der Kunststoffvorformling durch eine (hier nicht gezeigte) Kühleinrichtung statt.

Der gewendete Träger 142 wird mit den daran angeordneten Kunststoffvorformlinge transportiert und eine zweite Inspektionseinrichtung 121 nimmt wenigstens ein Bild der Kunststoffvorformlinge, genauer, nun der Grundkörper 10a der Kunststoffvorformlinge.

Das Bezugszeichen 125 kennzeichnet eine dritte Inspektionseinrichtung, welche ebenfalls die in einem Träger angeordneten Kunststoffvorformlinge inspiziert. Bevorzugt findet hier eine Inspektion auf Materialfehler wie etwa sog. BlackSpecs statt.

In dem Bereich des Trägers 142 ist eine Vakuumhalteeinrichtung (nicht gezeigt) vorgesehen, welche bewirkt, dass jeder einzelne Kunststoffvorformling an einem eigenen Träger gehalten wird. Auf diese Weise können fehlerhafte Kunststoffvorformlingen von ordnungsgemäßen Kunststoffvorformlingen getrennt werden.

Bei der in Fig. 4 gezeigten Ausführungsformen werden fehlerhafte Kunststoffvorformlinge zunächst noch an ihren (Vakuum)greifern gehalten, während ordnungsgemäße Kunststoffvorformlinge auf eine weitere Transporteinheit 150 fallen gelassen werden.

Von dieser weiteren Transporteinheit in Form eines Trägers 150 können die Vorformlinge wiederum auf eine weitere Transporteinheit 144 welche hier zwei parallel zueinander angeordnete Rollen, zwischen welchen die Kunststoffvorformlinge 10 geführt werden, fallen gelassen werden. Zu diesem Zweck kann der Träger 150 mit den einzelnen Kunststoffvorformlingen entlang des Pfeils P1 gegenüber der weiteren Transporteinheit verschoben werden.

Genau genommen wird der Träger mit den Kunststoffvorformlingen über der Transporteinheit 144 seitlich verfahren. Zu diesem Zweck können sich an dem Träger, wie unten in Fig. 4 gezeigt Spalte 155 öffnen und die Kunststoffvorformlinge können zwischen die Rollen fallen gelassen werden.

Die fehlerhaften Kunststoffvorformlinge, welche noch mittels Vakuumgreifern an dem Träger 142 gehalten werden, können durch eine selektive Ansteuerung beim zurückfahren des Trägers 142 abgeworfen werden.

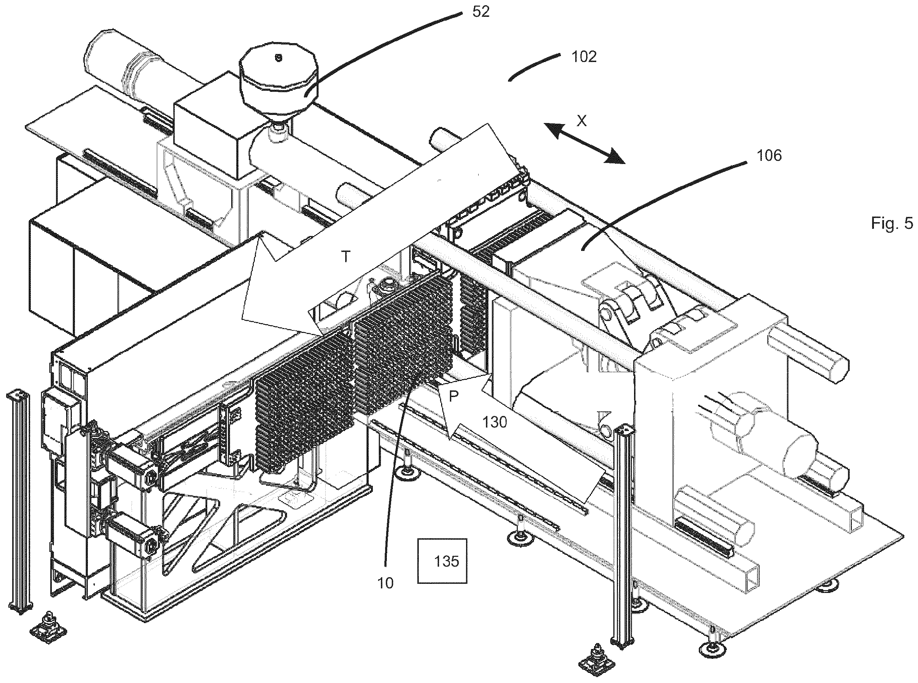

Fig. 5 zeigt eine detailliertere Darstellung der Herstellungseinrichtung 102. Diese weist eine Zuführeinrichtung 52 zum Zuführen eines Kunststoffmaterials, z.B. PET auf. Im Inneren eines Gehäuses ist wenigstens eine Heizeinrichtung zum Erwärmen des Kunststoffes angeordnet. Weiterhin ist eine Vielzahl von Herstellungseinheiten vorgesehen (nicht gezeigt), die jeweils einzelne Kunststoffvorformlinge herstellen. Daneben ist wenigstens eine Plastifiziereinheit vorgesehen und vorteilhaft auch eine Förderschnecke zum Fördern von Kunststoffmasse.

Bevorzugt weist jede dieser Herstellungseinheiten eine Kavität zum Formen der Kunststoffvorformlinge auf und bevorzugt auch ein dieser Kavität zugeordnetes Heizelement zum Erwärmen der Kavitäten. Bevorzugt handelt es sich hierbei um elektrisch betriebene Heizelemente.

Die einzelnen Kunststoffvorformlinge werden von einer Entnahmeeinrichtung 104 entnommen und insbesondere aus den einzelnen Kavitäten und/oder Herstellungseinheiten entnommen. Das Bezugszeichen 106 kennzeichnet die Kühleinrichtung. Diese ist bevorzugt in der Längsrichtung der Kunststoffvorformlinge (hier in der Richtung X) beweglich.

Eine Transporteinrichtung transportiert einen Träger mit den von diesem gehaltenen Kunststoffvorformlingen in der Transportrichtung T.

Das Bezugszeichen 130 kennzeichnet eine Inspektionseinrichtung, welche in der durch den Pfeil gezeigten Beobachtungsrichtung die von dem Träger gehaltenen Kunststoffvorformlinge inspiziert. Dabei ist bevorzugt diese Inspektionseinrichtung 130 und bevorzugt eine dieser Inspektionseinrichtung zugeordnete Auswerteeinrichtung in der Lage, die aufgenommenen Bilder derart auszuwerten, dass einzelne hergestellte Kunststoffvorformlinge erfasst werden können. Die Inspektionseinrichtung gibt bevorzugt für jeden einzelnen Kunststoffvorformling einen Wert aus, der für diesen charakteristisch ist und insbesondere für eine Temperatur dieses Kunststoffvorformlings 10.

Das Bezugszeichen 135 kennzeichnet schematisch eine Zuordnungseinrichtung, welche jedem von der Inspektionseinrichtung inspizierten Kunststoffvorformling 10 diejenige Herstellungseinheit 103 zuordnet, welche diesen Kunststoffvorformling hergestellt hat.

Das Bezugszeichen 20 kennzeichnet wieder die Steuerungseinrichtung zum Steuern und insbesondere Regeln der Herstellungseinrichtung 102, welche insbesondere dazu geeignet und bestimmt ist, die einzelnen Herstellungseinheiten 103 individuell zu steuern und insbesondere zu regeln.

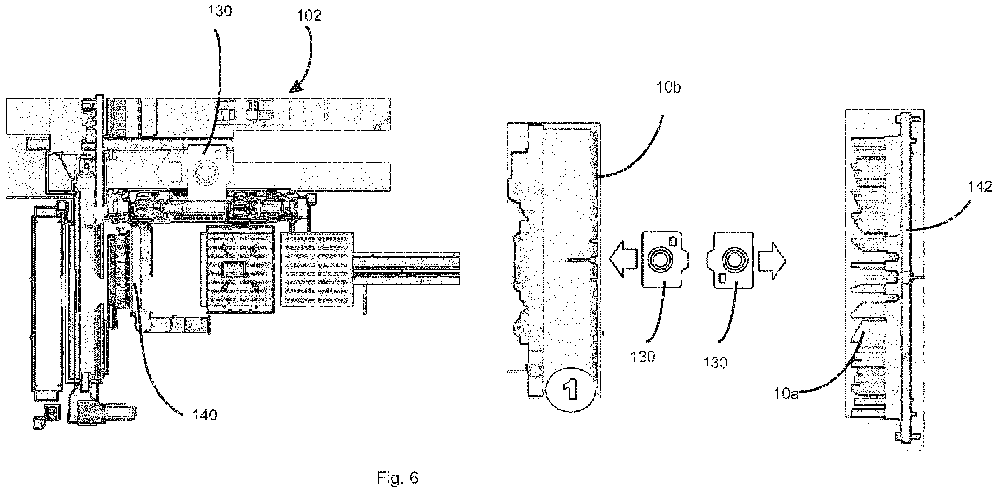

Fig. 6 zeigt eine weitere Ausgestaltung der erfindungsgemäßen Vorrichtung. Hier ist auch die Übernahmeeinrichtung 142 gezeigt, welche die einzelnen Kunststoffvorformlinge von der Transporteinrichtung übernimmt.

Im rechten Teilbild von Fig. 6 sind zwei mögliche Positionen der Inspektionseinrichtung gezeigt, wobei mit der linken Inspektionseinrichtung 130 die Mündungen 10b der Kunststoffvorformlinge inspiziert werden können und mit der rechten Inspektionseinrichtung 130 deren Grundkörper 10a inspiziert werden können.

## Patentansprüche

1. Vorrichtung zum Herstellen von Kunststoffvorformlingen (10) mit einer Herstellungseinrichtung (102), welche eine Vielzahl von Herstellungseinheiten (103) aufweist, wobei jede dieser Herstellungseinheiten (103) zum Herstellen eines Kunststoffvorformlings (10) geeignet und bestimmt ist, wobei diese Kunststoffvorformlinge (10) jeweils einteilig ausgebildet sind und wenigstens einen Grundkörper sowie einen an dem Grundkörper angeordneten Gewindeabschnitt (10b) aufweisen, wobei die Vorrichtung eine Entnahmeeinrichtung (104) aufweist, welche dazu geeignet und bestimmt ist, die von der Herstellungseinrichtung (102) gefertigten Kunststoffvorformlinge (10) von dieser Herstellungseinrichtung (102) gemeinsam zu entnehmen, wobei die Entnahmeeinrichtung (104) einen Träger (140) aufweist, der zum Halten der entnommenen Kunststoffvorformlinge (10) geeignet und bestimmt ist sowie eine Transporteinrichtung (160), welche dazu geeignet und bestimmt ist, den Träger (140) mit den von der Entnahmeeinrichtung (104) entnommenen Kunststoffvorformlingen gemeinsam in einer vorgegebenen Transportrichtung zu transportieren, wobei die Vorrichtung (1) eine Inspektionseinrichtung (30) zum Inspizieren der gefertigten Kunststoffvorformlinge (10) aufweist,
**dadurch gekennzeichnet, dass**
die Inspektionseinrichtung (130) wenigstens eine Infrarot-Bildaufnahmeeinrichtung (132) aufweist, welche dazu geeignet und bestimmt ist, ein ortsaufgelöstes Bild wenigstens eines Bereiches einer Vielzahl der gefertigten Kunststoffvorformlinge (10) aufzunehmen und wenigstens einen Messwert auszugeben, der für eine physikalische Eigenschaft der Kunststoffvorformlinge (10) charakteristisch ist.

2. Vorrichtung nach Anspruch 1,
**dadurch gekennzeichnet, dass**
die Vorrichtung eine Übernahmeeinrichtung (142) aufweist, welche dazu geeignet und bestimmt ist, die Kunststoffvorformlinge (10) von dem Träger (140) zu übernehmen.

3. Vorrichtung (1) nach Anspruch 2,
**dadurch gekennzeichnet, dass**
die Übernahmeeinrichtung (142) eine Vielzahl von Übernahmeeinheiten aufweist, welche dazu geeignet und bestimmt sind, jeweils einzelne Kunststoffvorformlinge (10) von dem Träger (140) zu übernehmen.

4. Vorrichtung (1) nach wenigstens einem der vorangegangenen Ansprüche,
**dadurch gekennzeichnet, dass**
die Infrarot - Bildaufnahmeeinrichtung (132) dazu geeignet und bestimmt ist, Strahlung zu erfassen, welche in einem Wellenlängenbereich von wenigstens 4000nm - 20000nm, bevorzugt in einem Wellenlängenbereich von 6000nm - 18000nm und besonders bevorzugt in einem Wellenlängenbereich von 8000nm - 15000nm liegt.

5. Vorrichtung (1) nach wenigstens einem der vorangegangenen Ansprüche,
**dadurch gekennzeichnet, dass**
die Infrarot - Bildaufnahmeeinrichtung (132) dazu geeignet und bestimmt ist einen Wert auszugeben, der für eine Temperatur der Kunststoffvorformlinge (10) charakteristisch ist und bevorzugt dazu geeignet und bestimmt ist, für jeden der inspizierten Kunststoffvorformlinge wenigstens einen Wert auszugeben, der für dessen Temperatur charakteristisch ist.

6. Vorrichtung (1) nach wenigstens einem der vorangegangenen Ansprüche,
**dadurch gekennzeichnet, dass**
die Inspektionseinrichtung (130) derart angeordnet ist, dass sie dazu geeignet und bestimmt ist, die von dem Träger (140) gehaltenen Kunststoffvorformlinge (10) zu inspizieren und/oder die Inspektionseinrichtung (130) derart angeordnet ist, dass sie dazu geeignet und bestimmt ist, die von der Übernahmeeinrichtung (142) gehaltenen Kunststoffvorformlinge zu inspizieren.

7. Vorrichtung (1) nach wenigstens einem der vorangegangenen Ansprüche,
**dadurch gekennzeichnet, dass**
die Vorrichtung eine Zuordnungseinrichtung (135) aufweist, die dazu geeignet und bestimmt ist. einem von der Inspektionseinrichtung (130) inspizierten Kunststoffvorformling diejenige Herstellungseinheit (103) zuzuordnen, welche diesen Kunststoffvorformling hergestellt hat.

8. Vorrichtung (1) nach wenigstens einem der vorangegangenen Ansprüche,
**dadurch gekennzeichnet, dass**
die Vorrichtung eine Steuerungseinrichtung (20) zum Steuern der Herstellungseinrichtung (102) aufweist, wobei diese Steuerungseinrichtung(20) bevorzugt dazu geeignet und bestimmt ist, jede einzelne der Herstellungseinheiten (103) zu steuern.

9. Vorrichtung nach dem vorangegangenen Anspruch,
**dadurch gekennzeichnet, dass**
die Steuerungseinrichtung (20) dazu geeignet und bestimmt ist, die Herstellungseinrichtung (102) und/oder die einzelnen Herstellungseinheiten(103) in Abhängigkeit von dem wenigstens einen Messwert zu steuern und insbesondere zu regeln.

10. Vorrichtung (1) nach wenigstens einem der vorangegangenen Ansprüche,
**dadurch gekennzeichnet, dass**
die Vorrichtung (1) eine Kühleinrichtung (106) aufweist, welche dazu geeignet und bestimmt ist, die von der Herstellungseinrichtung (102) hergestellten Kunststoffvorformlinge (10) wenigstens abschnittsweise zu kühlen.

11. Vorrichtung (1) nach wenigstens einem der vorangegangenen Ansprüche,
**dadurch gekennzeichnet, dass**
die Vorrichtung (1) eine zweite Inspektionseinrichtung (170) zum Inspizieren der gefertigten Kunststoffvorformlinge (10) aufweist, wobei die zweite Inspektionseinrichtung (170) wenigstens eine Bildaufnahmeeinrichtung (172) und insbesondere eine Bildaufnahmeeinrichtung aufweist, welche dazu geeignet und bestimmt ist, ein ortsaufgelöstes Bild wenigstens eines zweiten Bereiches einer Vielzahl der gefertigten Kunststoffvorformlinge (10) aufzunehmen.

12. Verfahren zum Herstellen von Kunststoffvorformlingen (10) mit einer Herstellungseinrichtung (2), welche eine Vielzahl von Herstellungseinheiten (103) aufweist, wobei jede dieser Herstellungseinheiten (103) einen Kunststoffvorformling (10) herstellt, wobei diese Kunststoffvorformlinge (10) jeweils einteilig ausgebildet sind und wenigstens einen Grundkörper sowie einen an dem Grundkörper angeordneten Gewindeabschnitt (10b) aufweisen, wobei die Vorrichtung eine Entnahmeeinrichtung (104) aufweist, welche die von der Herstellungseinrichtung (103) gefertigten Kunststoffvorformlinge von dieser Herstellungseinrichtung (103) gemeinsam entnimmt, wobei die Entnahmeeinrichtung (4) einen Träger (140) aufweist, der die entnommenen Kunststoffvorformlinge (10) hält sowie eine Transporteinrichtung, welche den Träger (140) mit den von der Entnahmeeinrichtung (104) entnommenen Kunststoffvorformlingen (10) gemeinsam in einer vorgegebenen Transportrichtung transportiert, wobei die Vorrichtung (1) eine Inspektionseinrichtung (30) aufweist, welche die gefertigten Kunststoffvorformlinge inspiziert,
**dadurch gekennzeichnet, dass**
die Inspektionseinrichtung (130) wenigstens eine Infrarot-Bildaufnahmeeinrichtung (132) aufweist, welche ein ortsaufgelöstes Bild wenigstens eines Bereiches einer Vielzahl der gefertigten Kunststoffvorformlinge (10) aufnimmt und wenigstens einen Wert ausgibt, der für eine physikalische Eigenschaft der inspizierten Kunststoffvorformlinge (10) charakteristisch ist.

13. Verfahren nach dem vorangegangenen Anspruch,
**dadurch gekennzeichnet, dass**
eine Übernahmeeinrichtung die Kunststoffvorformlinge von dem Träger übernimmt.

## Claims

1. An apparatus for manufacturing plastic preforms (10) comprising a manufacturing device (102), which comprises a plurality of production units (103), each of which is suitable and intended for manufacturing a plastic preform (10), wherein these plastic preforms (10) are each formed as a single piece and comprise at least a base body and a threaded section arranged on the base body (10b) arranged on the base body, wherein the apparatus comprises a removal device (104) that is suitable and intended to remove the plastic preforms (10) manufactured by the manufacturing device (102) from said manufacturing device (102) collectively, wherein the removal device (104) comprises a carrier (140) suitable and intended for holding the removed plastic preforms (10), as well as a transport device (160) suitable and intended for transporting the carrier (140) together with the plastic preforms removed by the removal device (104) in a predetermined transport direction, wherein the apparatus (1) comprises an inspection device (30) for inspecting the manufactured plastic preforms (10), **characterized in that**
the inspection device (130) comprises at least one infrared image recording device (132) that is suitable and intended to record a spatially resolved image of at least one region of a plurality of the manufactured plastic preforms (10) and to output at least one measured value that is characteristic of a physical property of the plastic preforms (10).

2. The apparatus according to claim 1,
**characterized in that**
the apparatus comprises a transfer device (142) that is suitable and intended to transfer the plastic preforms (10) from the carrier (140).

3. The apparatus (1) according to claim 2,
**characterized in that**
the transfer device (142) comprises a plurality of transfer units, each of which is suitable and intended to transfer individual plastic preforms (10) from the carrier (140).

4. The apparatus (1) according to at least one of the preceding claims,
**characterized in that**
the infrared image recording device (132) is suitable and intended to detect radiation in a wavelength range of at least 4000 nm - 20,000 nm, preferably in a wavelength range of 6000 nm to 18,000 nm, and particularly preferably in a wavelength range of 8,000 nm to 15,000 nm.

5. The apparatus (1) according to at least one of the preceding claims, **characterized in that**
the infrared image recording device (132) is suitable and intended to output a value that is characteristic of a temperature of the plastic preforms (10) and is preferably suitable and intended to output, for each of the inspected plastic preforms, at least one value that is characteristic of its temperature.

6. The apparatus (1) according to at least one of the preceding claims, **characterized in that**
the inspection device (130) is arranged such that it is suitable and intended to inspect the plastic preforms (10) held by the carrier (140) and/or the inspection device (130) is arranged such that it is suitable and intended to inspect the plastic preforms held by the transfer device (142).

7. The apparatus (1) according to at least one of the preceding claims, **characterized in that**
the apparatus comprises an assignment device (135) that is suitable and intended to assign a plastic preform inspected by the inspection device (130) to the production unit (103) that produced that plastic preform.

8. The apparatus (1) according to at least one of the preceding claims, **characterized in that**
the apparatus comprises a control device (20) for controlling the manufacturing device (102), wherein this control device (20) is preferably suitable and intended to control each individual manufacturing unit (103).

9. The apparatus according to the preceding claim,
**characterized in that**
the control device (20) is suitable and intended to control and, in particular, regulate the manufacturing device (102) and/or the individual manufacturing units (103) based on the at least one measured value.

10. The apparatus (1) according to at least one of the preceding claims, **characterized in that**
the apparatus (1) comprises a cooling device (106) that is suitable and intended to cool the plastic preforms (10) manufactured by the manufacturing device (102) at least in sections.

11. The apparatus (1) according to at least one of the preceding claims, **characterized in that**
the apparatus (1) comprises a second inspection device (170) for inspecting the manufactured plastic preforms (10), wherein the second inspection device (170) comprises at least one image recording device (172) and, in particular, an image recording device that is suitable and intended for recording a spatially resolved image of at least a second region of a plurality of the manufactured plastic preforms (10).

12. A method for manufacturing plastic preforms (10) using a manufacturing device (2), which comprises a plurality of manufacturing units (103), wherein each of these manufacturing units (103) manufactures a plastic preform (10), wherein these plastic preforms (10) are each formed as a single piece and comprise at least a base body and a threaded section (10b) arranged on the base body, wherein the apparatus comprises a removal device (104) that collectively removes the plastic preforms manufactured by the manufacturing device (103) from said manufacturing device (103), wherein the removal device (104) comprises a carrier (140) that holds the removed plastic preforms (10) and a transport device that transports the carrier (140) together with the plastic preforms (10) removed by the removal mechanism (104) in a predetermined transport direction, wherein the apparatus (1) comprises an inspection device (30) that inspects the manufactured plastic preforms,
**characterized in that**
the inspection device (130) comprises at least one infrared image recording device (132) that records a spatially resolved image of at least one region of a plurality of the manufactured plastic preforms (10) and outputs at least one value that is characteristic of a physical property of the inspected plastic preforms (10).

13. The method according to the preceding claim,
**characterized in that**
a transfer device transfers the plastic preforms from the carrier.

## Revendications

1. Dispositif de fabrication de préformes en plastique (10) avec un appareil de fabrication (102) qui présente une pluralité d'unités de fabrication (103), dans lequel chacune de ces unités de fabrication (103) est adaptée pour et destinée à la fabrication d'une préforme en plastique (10), dans lequel ces préformes en plastique (10) sont chacune réalisées en une seule pièce et présentent au moins un corps de base ainsi qu'une section filetée (10b) disposée sur le corps de base, dans lequel le dispositif présente un appareil de prélèvement (104) qui est adapté pour et destiné à prélever conjointement les préformes en plastique (10) produites par l'appareil de fabrication (102) de cet appareil de fabrication (102), dans lequel l'appareil de prélèvement (104) présente un support (140) qui est adapté pour et destiné à maintenir les préformes en plastique (10) prélevées ainsi qu'un appareil de transport (160) qui est adapté pour et destiné à transporter le support (140) avec les préformes en plastique prélevées par l'appareil de prélèvement (104) conjointement dans une direction de transport prédéfinie, dans lequel le dispositif (1) présente un appareil d'inspection (30) pour inspecter les préformes en plastique (10) produites,
**caractérisé en ce que**
l'appareil d'inspection (130) présente au moins un appareil d'acquisition d'image infrarouge (132), qui est adapté pour et destiné à acquérir une image en résolution spatiale d'au moins une zone d'une pluralité des préformes en plastique (10) produites et délivrer au moins une valeur de mesure qui est caractéristique d'une propriété physique des préformes en plastique (10).

2. Dispositif selon la revendication 1,
**caractérisé en ce que**
le dispositif présente un appareil de réception (142) qui est adapté pour et destiné à recevoir les préformes en plastique (10) du support (140).

3. Dispositif (1) selon la revendication 2,
**caractérisé en ce que**
l'appareil de réception (142) présente une pluralité d'unités de réception,
qui sont adaptées pour et destinées à recevoir respectivement des préformes en plastique (10) individuelles du support (140).

4. Dispositif (1) selon au moins l'une quelconque des revendications précédentes,
**caractérisé en ce que**
l'appareil d'acquisition d'image infrarouge (132) est adapté pour et destiné à capter un rayonnement qui se situe dans une plage de longueurs d'onde d'au moins 4 000 nm - 20 000 nm, de préférence dans une plage de longueurs d'onde de 6 000 nm - 18 000 nm et particulièrement préférentiellement dans une plage de longueurs d'onde de 8 000 nm - 15 000 nm.

5. Dispositif (1) selon au moins l'une quelconque des revendications précédentes,
**caractérisé en ce que**
l'appareil d'acquisition d'image infrarouge (132) est adapté pour et destiné à délivrer une valeur qui est caractéristique d'une température des préformes en plastique (10) et est de préférence adapté pour et destiné à délivrer pour chacune des préformes en plastique inspectées au moins une valeur qui est caractéristique de sa température.

6. Dispositif (1) selon au moins l'une quelconque des revendications précédentes,
**caractérisé en ce que**
l'appareil d'inspection (130) est disposé de sorte qu'il est adapté pour et destiné à inspecter les préformes en plastique (10) maintenues par le support (140) et/ou l'appareil d'inspection (130) est disposé de sorte qu'il est adapté pour et destiné à inspecter les préformes en plastique maintenues par l'appareil de réception (142).

7. Dispositif (1) selon au moins l'une quelconque des revendications précédentes,
**caractérisé en ce que**
le dispositif présente un appareil d'affectation (135) qui est adapté pour et destiné à affecter à une préforme en plastique inspectée par le second appareil d'inspection (130) l'unité de fabrication (103) qui a fabriqué cette préforme en plastique.

8. Dispositif (1) selon au moins l'une quelconque des revendications précédentes,
**caractérisé en ce que**
le dispositif présente un appareil de commande (20) pour commander l'appareil de fabrication (102), dans lequel cet appareil de commande (20) est de préférence adapté pour et destiné à commander chacune des unités de fabrication (103).

9. Dispositif selon la revendication précédente, **caractérisé en ce que**
l'appareil de commande (20) est adapté pour et destiné à commander et en particulier réguler l'appareil de fabrication (102) et/ou les unités de fabrication (103) individuelles en fonction de l'au moins une valeur de mesure.

10. Dispositif (1) selon au moins l'une quelconque des revendications précédentes,
**caractérisé en ce que**
le dispositif (1) présente un appareil de refroidissement (106) qui est adapté pour et destiné à refroidir au moins par sections les préformes en plastique (10) fabriquées par l'appareil de fabrication (102).

11. Dispositif (1) selon au moins l'une quelconque des revendications précédentes,
**caractérisé en ce que**
le dispositif (1) présente un second appareil d'inspection (170) pour inspecter les préformes en plastique (10) produites, dans lequel le second appareil d'inspection (170) présente au moins un appareil d'acquisition d'image (172) et en particulier un appareil d'acquisition d'image qui est adapté pour et destiné à acquérir une image en résolution spatiale d'au moins une seconde zone d'une pluralité des préformes en plastique (10) produites.

12. Procédé de fabrication de préformes en plastique (10) avec un appareil de fabrication (2) qui présente une pluralité d'unités de fabrication (103), dans lequel chacune de ces unités de fabrication (103) fabrique une préforme en plastique (10), dans lequel ces préformes en plastique (10) sont chacune réalisées en une seule pièce et présentent au moins un corps de base ainsi qu'une section filetée (10b) disposée sur le corps de base, dans lequel le dispositif présente un appareil de prélèvement (104), qui prélève conjointement les préformes en plastique produites par l'appareil de fabrication (103) de cet appareil de fabrication (103), dans lequel l'appareil de prélèvement (4) présente un support (140) qui maintient les préformes en plastique (10) prélevées ainsi qu'un appareil de transport qui transporte le support (140) avec les préformes en plastique (10) prélevées par l'appareil de prélèvement (104) conjointement dans une direction de transport prédéfinie, dans lequel le dispositif (1) présente un appareil d'inspection (30) qui inspecte les préformes en plastique produites,
**caractérisé en ce que**
l'appareil d'inspection (130) présente au moins un appareil d'acquisition d'image infrarouge (132) qui acquiert une image en résolution spatiale d'au moins une zone d'une pluralité des préformes en plastique (10) produites et délivre au moins une valeur qui est caractéristique d'une propriété physique des préformes en plastique (10) inspectées.

13. Procédé selon la revendication précédente, **caractérisé en ce que**
un appareil de réception réceptionne les préformes en plastique provenant du support.
